# EUROPEAN PATENT APPLICATION

(11) **EP 4 564 558 A1**
(43) Date of publication of application: **04.06.2025**
(21) Application number: 24194517.9
(22) Date of filing: 14.08.2024
(51) Int. Cl.: H01M 50/251, H01M 50/258, H01M 50/358

(54) **ENERGY STORAGE SYSTEM**

(30) Priority: 28.11.2023 KR 20230167801
(71) Applicant: SAMSUNG SDI CO., LTD., Giheung-gu Yongin-si, Gyeonggi-do 17084 (KR)
(72) Inventor: KIM, Soo Taek, 16678 Suwon-si (KR)
(74) Representative: Marks & Clerk LLP

(57) **Abstract**

An energy storage system configured to reduce damage caused by a flame in response to a battery igniting. The energy storage system includes a cabinet, a battery modules inside the cabinet and each including a vent, a first channel facing the vent and including a first end portion and a second end portion spaced apart from each other in a first direction, a second channel inside the cabinet and connected to the second end portion, a guide member in the first channel and configured to guide movement of a flame or gas discharged from the vent in the first direction, and a discharge member connected to the second channel and configured to discharge a gas introduced into the second channel to the outside of the cabinet.

## Description

### BACKGROUND

### 1. Field

Aspects of embodiments of the present disclosure relate to an energy storage system.

### 2. Discussion of Related Art

Generally, an energy storage system (ESS) is a device that can store surplus electricity or store electricity produced using renewable energy. An ESS may include a plurality of battery modules in racks and a plurality of the racks in a container. A battery module may be constructed by assembling a plurality of secondary batteries, which are electrically connected to each other, in various structures.

The above-described information disclosed in the technology that forms the background of the present disclosure is only intended to improve understanding of the background of the present disclosure, and thus may include information that does not constitute the related art.

### SUMMARY

The present disclosure is directed to an energy storage system configured to reduce damage caused by a flame in response to a battery igniting.

These and other aspects and features of the present disclosure will be described in or will be apparent from the following description of some embodiments of the present disclosure.

According to an aspect of the present disclosure, an energy storage system includes a cabinet, battery modules inside the cabinet and each including a vent, a first channel facing the vent and including a first end portion and a second end portion spaced apart from each other in a first direction, a second channel inside the cabinet and connected to the second end portion, a guide member in the first channel and configured to guide movement of a flame or gas discharged from the vent in the first direction, and a discharge member connected to the second channel and configured to discharge a gas introduced into the second channel to an outside of the cabinet.

The battery modules may be stacked vertically inside the cabinet, and the first channel may be between a pair of vertically adjacent battery modules.

A distance between the pair of vertically adjacent battery modules may be greater than a height of any one of the battery modules.

A volume of the second channel may be greater than a volume of the first channel.

The first channel may cross the second channel.

The cabinet may include a frame body, a support rail inside the frame body and supporting the battery modules, and a cover surrounding an outer surface of the frame body.

The cover may include a pair of side covers facing side surfaces of the battery module and spaced apart from each other in a second direction crossing the first direction, and may further include a first partition between the side cover and the battery modules.

The first partition may be in contact with a side surface of the support rail.

The battery modules may be arranged in at least two rows in the second direction and may further include a second partition between the battery modules arranged in different rows.

The second partition may be in contact with a side surface of the support rail.

The cover may further include a door facing the first end portion and that is configured to open or close an internal space of the frame body, and an end cover spaced apart from the door and facing the second end portion.

The guide member may include a guide vane facing the first end portion and that is configured to block a flame or gas introduced into the first channel from being discharged into the first end portion.

The guide member may further include a sealing member coupled to the guide vane and that seals a gap between the first end portion and the guide vane.

The sealing member may be elastically deformable.

The guide member may further include a guide louver facing the vent and configured to change a movement direction of the flame or gas discharged from the vent toward the second end portion.

The discharge member may include a discharge hole in an outer side of the cabinet, a third channel inside the discharge hole and connected to the second channel and the discharge hole, a blocking member facing the discharge hole and configured to block a flame introduced into the third channel from passing through the discharge hole, and a canopy facing the blocking member and configured to guide discharge of the gas passing through the blocking member.

The blocking member may include a blocking filter including mesh holes.

The third channel may cross the second channel.

The energy storage system may further include a backflow prevention member between the first channel and the second channel and configured to block the flame or gas introduced into the second channel from flowing backward into the first channel.

The backflow prevention member may include a check valve that is configured to open in response to a pressure of the first channel exceeding a pressure of the second channel.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:

The above and other objects, features and advantages of the present disclosure will become more apparent to those of ordinary skill in the art by describing example embodiments thereof in detail with reference to the accompanying drawings, in which:
FIG. 1 is a perspective view schematically illustrating a configuration of an energy storage system according to an embodiment of the present disclosure;
FIG. 2 is a cross-sectional perspective view schematically illustrating the configuration of the energy storage system according to the embodiment of the present disclosure;
FIG. 3 is a side cross-sectional view schematically illustrating the configuration of the energy storage system according to the embodiment of the present disclosure;
FIG. 4 is a front cross-sectional view schematically illustrating the configuration of the energy storage system according to the embodiment of the present disclosure;
FIG. 5 is an exploded perspective view schematically illustrating a configuration of a cabinet according to the embodiment of the present disclosure;
FIG. 6 is a perspective view schematically illustrating a configuration of a guide member according to the embodiment of the present disclosure;
FIG. 7 is a cross-sectional view schematically illustrating the configuration of the guide member according to the embodiment of the present disclosure;
FIG. 8 is a cross-sectional perspective view schematically illustrating a configuration of a discharge member according to the embodiment of the present disclosure;
FIG. 9 is an exploded perspective view schematically illustrating the configuration of the discharge member according to the embodiment of the present disclosure;
FIGS. 10 to 13 are views schematically illustrating an operation process of the energy storage system according to the embodiment of the present disclosure;
FIG. 14 is a plan view schematically illustrating the configuration of the energy storage system according to another embodiment of the present disclosure;
FIG. 15 is a cross-sectional view schematically illustrating a configuration of an energy storage system according to another embodiment of the present disclosure;
FIG. 16 is a view schematically illustrating a state in which a flame or gas is discharged from a vent;
FIG. 17 is a cross-sectional view schematically illustrating a configuration of an energy storage system according to still another embodiment of the present disclosure; and
FIG. 18 is a view schematically illustrating an operation of the energy storage system according to still another embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

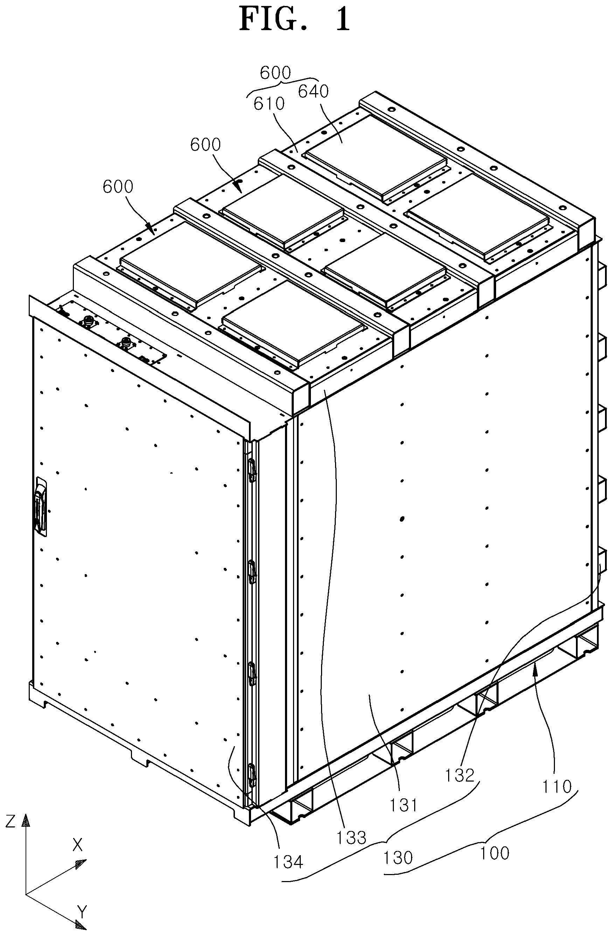

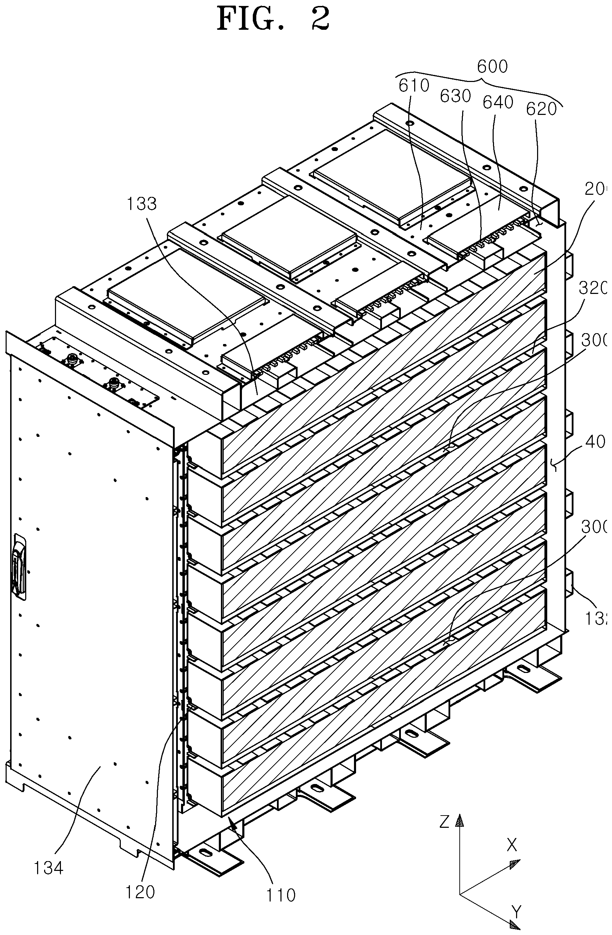

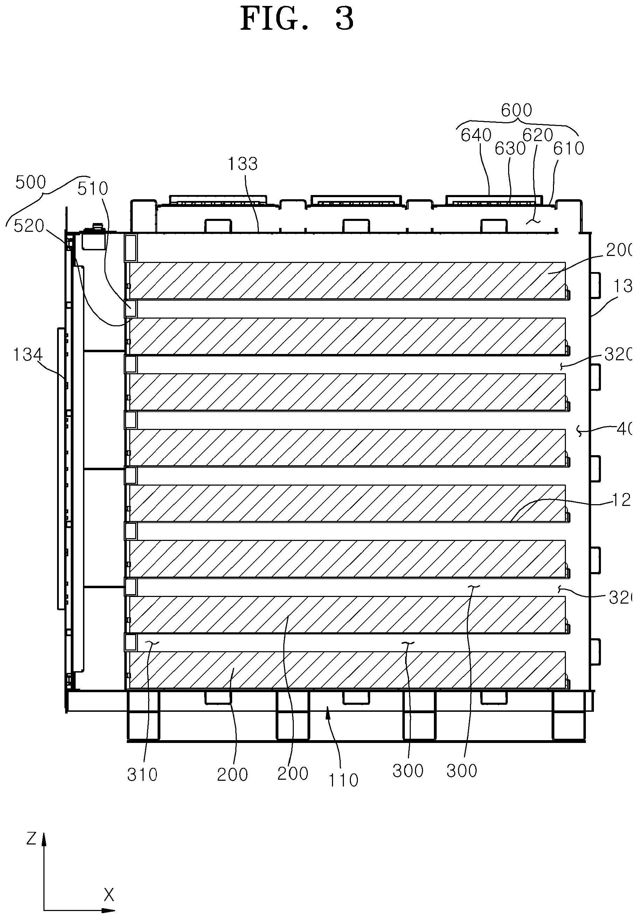

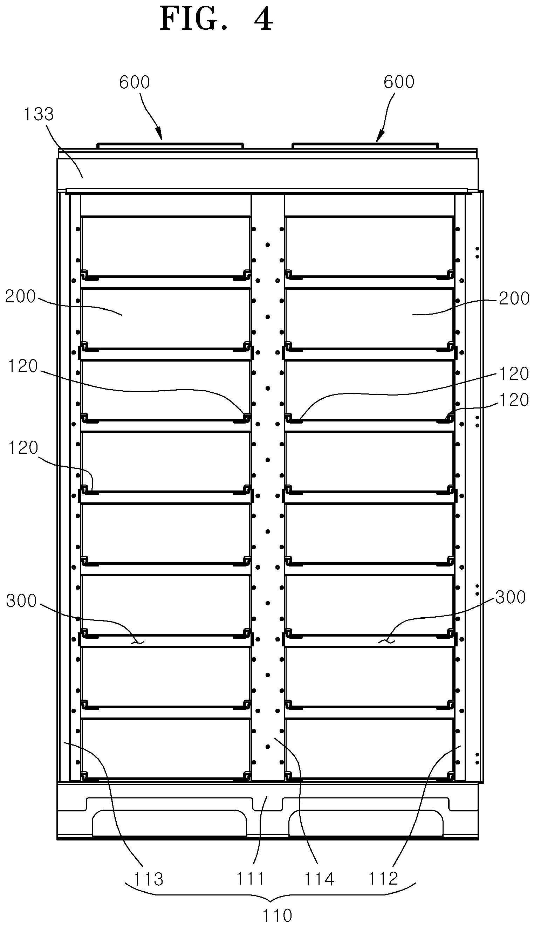

FIG. 1 is a perspective view schematically illustrating a configuration of an energy storage system according to an embodiment of the present disclosure, FIG. 2 is a cross-sectional perspective view schematically illustrating the configuration of the energy storage system according to the embodiment of the present disclosure, FIG. 3 is a side cross-sectional view schematically illustrating the configuration of the energy storage system according to the embodiment of the present disclosure, and FIG. 4 is a front cross-sectional view schematically illustrating the configuration of the energy storage system according to the embodiment of the present disclosure.

Referring to FIGS. 1 to 4, the energy storage system according to the present embodiment includes a cabinet 100, at least one battery module 200, at least one first channel 300, a second channel 400, a guide member 500, and a discharge member 600.

The cabinet 100 may form the external appearance of the energy storage system. Embodiments of the cabinet 100 may include various types of closed structures with an empty inside, such as a container and the like.

A longitudinal direction of the cabinet 100 to be described below may be a direction parallel (or substantially parallel) to an X-axis with respect to FIG. 1, a width direction of the cabinet 100 may be a direction parallel (or substantially parallel) to a Y-axis with respect to FIG. 1, and a height direction of the cabinet 100 may be a direction parallel (or substantially parallel) to a Z-axis with respect to FIG. 1. The height direction of the cabinet 100 may be a direction perpendicular (or substantially perpendicular) to the ground, that is, a direction parallel (or substantially parallel) to a vertical direction.

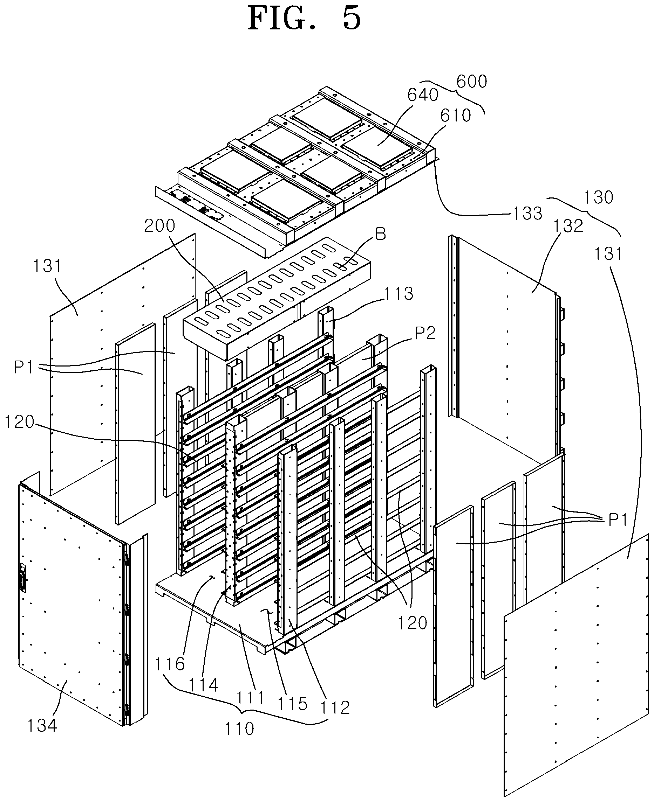

FIG. 5 is an exploded perspective view schematically illustrating the configuration of the cabinet 100 according to the embodiment of the present disclosure.

Referring to FIG. 5, the cabinet 100 may include a frame body 110, a support rail 120, and a cover 130.

The frame body 110 may form a framework of the cabinet 100 and may support a side cover 131, an end cover 132, and a top cover 133.

The frame body 110 may include a base 111, a first outer frame 112, a second outer frame 113, and an inner frame 114.

The base 111 may be seated on the ground. An upper surface of the base 111 may have a flat plate shape.

The first outer frame 112 may have the shape of a pillar extending upward from the upper surface of the base 111. The first outer frame 112 may include a plurality of first outer frames 112. The plurality of first outer frames 112 may be spaced apart from each other at a set interval in the longitudinal direction of the cabinet 100. The number of first outer frames 112 and the interval between the first outer frames 112 may be changed in various ways depending on the size or the like of the base 111.

The second outer frame 113 may be a pillar extending upward from the upper surface of the base 111. The second outer frame 113 may be spaced apart from the first outer frame 112 in the width direction of the cabinet 100. In the embodiment illustrated in FIG. 5, the first outer frame 112 and the second outer frame 113 may be at both end portions of the base 111 in the width direction. The second outer frame 113 may be a plurality of second outer frames 113. The plurality of second outer frames 113 may be spaced apart from each other at a set interval in the longitudinal direction of the cabinet 100. The number of second outer frames 113 and the interval between the second outer frames 113 may be the same as those of the first outer frames 112.

The inner frame 114 may be a pillar extending upward from the upper surface of the base 111. The inner frame 114 may be between the first outer frame 112 and the second outer frame 113. The inner frame 114 may be a plurality of inner frames 114. The plurality of inner frames 114 may be spaced apart from each other at a set interval in the longitudinal direction of the cabinet 100. The number of the inner frames 114 and the interval between the inner frames 114 may be the same as those of the first outer frame 112.

The frame body 110 may further include a first accommodation space 115 between the first outer frame 112 and the inner frame 114, and a second accommodation space 116 between the second outer frame 113 and the inner frame 114.

The support rail 120 may be inside the frame body 110 and may support the battery module 200 inside the frame body 110. The support rail 120 may be a bar whose longitudinal direction extends in the longitudinal direction of the cabinet 100. The support rail 120 may have a substantially "L"-shaped cross section. The support rail 120 may be a plurality of support rails 120. All of the plurality of support rails 120 may be in the first accommodation space 115 and the second accommodation space 116.

The plurality of support rails 120 inside the first accommodation space 115 may be arranged in two rows in a width direction of the first accommodation space 115. The support rails 120 arranged in different rows may face each other inside the first accommodation space 115. One surface of the support rails 120 arranged in any one row may be fixed to the first outer frame 112 inside the first accommodation space 115. One surface of the support rails 120 arranged in the other row may be fixed to the inner frame 114 inside the first accommodation space 115. The plurality of support rails 120 inside the first accommodation space 115 may be stacked in a height direction of the first accommodation space 115, that is, at a set interval in the vertical direction.

The plurality of support rails 120 inside the second accommodation space 116 may be arranged in two rows in a width direction of the second accommodation space 116. The support rails 120 arranged in different rows may face each other inside the second accommodation space 116. One surface of the support rails 120 arranged in any one row may be fixed to the second outer frame 113 inside the second accommodation space 116. One surface of the support rails 120 arranged in the other row may be fixed to the inner frame 114 inside the second accommodation space 116. The plurality of support rails 120 inside the second accommodation space 116 may be stacked in a height direction of the second accommodation space 116, that is, at a set interval in the vertical direction.

The cover 130 may surround outer surfaces of the frame body 110.

The cover 130 may include the side cover 131, the end cover 132, the top cover 133, and a door 134.

The side cover 131 may surround side surfaces of the frame body 110. The side surfaces of the frame body 110 may be surfaces parallel (or substantially parallel) to the longitudinal direction of the cabinet 100, among all of circumferential surfaces of the frame body 110. The side cover 131 may have a substantially flat plate shape.

The side cover 131 may be a pair of side covers 131. The pair of side covers 131 may be spaced apart from each other in the width direction of the cabinet 100. The pair of side covers 131 may surround both side surfaces of the frame body 110. In one or more embodiments, an inner surface of any one of the pair of side covers 131 may face an outer surface of the first outer frame 112. An inner surface of the other one of the pair of side covers 131 may face an outer surface of the second outer frame 113. The side covers 131 may be fixed to the base 111 in any suitable manner, such as by welding, bolting, etc.

The end cover 132 may surround a rear surface of the frame body 110. The rear surface of the frame body 110 may be any one surface among the circumferential surfaces of the frame body 110 parallel to the width direction of the cabinet 100. The end cover 132 may have a substantially flat plate shape. An inner surface of the end cover 132 may face the first outer frame 112, the second outer frame 113, and the inner frame 114 that are positioned at the rearmost end among the plurality of first outer frames 112, the plurality of second outer frames 113, and the plurality of inner frames 114. The end cover 132 may be fixed to the base 111 in any suitable manner, such as by welding, bolting, etc.

The top cover 133 may surround an upper surface of the frame body 110. The top cover 133 may have a substantially flat plate shape. An inner surface of the top cover 133 may face upper end portions of the plurality of first outer frames 112, upper end portions of the plurality of second outer frames 113, and upper end portions of the plurality of inner frames 114. The end cover 132 may be fixed to the upper end portions of the first outer frames 112, the upper end portions of the second outer frames 113, and the upper end portions of the inner frames 114 in any suitable manner, such as by welding, bolting, etc.

The door 134 may surround a front surface of the frame body 110. The front surface of the frame body 110 may be a remaining one surface that is located at an opposite side of the end cover 132, among the circumferential surfaces of the frame body 110 parallel (or substantially parallel) to the width direction of the cabinet 100. The door 134 may have a substantially flat plate shape. An inner surface of the door 134 may face the first outer frame 112, the second outer frame 113, and the inner frame 114 that are positioned at the frontmost end among the plurality of first outer frames 112, the plurality of second outer frames 113, and the plurality of inner frames 114. One side of the door 134 may be rotatably connected to any one of the side covers 131 or to a separate structure installed on the base 111. The door 134 may open or close an internal space of the frame body 110 depending to the direction of rotation of the door 134.

A first direction (to be described below) may be a direction from the door 134 toward the end cover 132, among directions parallel (or substantially parallel) to the longitudinal direction of the cabinet 100, and a second direction may be any one direction crossing the first direction, among directions parallel (or substantially parallel) to the width direction of the cabinet 100.

The battery module 200 may function as a unit structure that stores and supplies power in an energy storage system. The battery module 200 may include a module case and a plurality of battery cells accommodated inside the module case. The battery cell may be a prismatic, cylindrical, and/or pouch-type secondary battery in which an electrode assembly including a positive electrode plate and a negative electrode plate that are placed at both sides of a separator is inside a cell case, and which is capable of charging or discharging a preset amount of power. The battery module 200 may have a substantially rectangular parallelepiped box shape.

The battery module 200 may be a plurality of battery modules 200. The plurality of battery modules 200 may be arranged in at least two rows in the second direction, that is, a direction parallel (or substantially parallel) to the width direction of the cabinet 100. In one or more embodiments, the plurality of battery modules 200 may be arranged in two rows in the second direction, and the plurality of battery modules 200 arranged in different rows may be inside the first accommodation space 115 and the second accommodation space 116. The plurality of battery modules 200 may be stacked in the vertical direction inside each of the first accommodation space 115 and the second accommodation space 116.

The battery module 200 may be seated on the support rails 120 and supported by the support rails 120. A lower surface of the battery module 200 may be in contact with a pair of support rails 120 facing each other in the width direction of the cabinet 100 inside the first accommodation space 115 or the second accommodation space 116.

A distance between bottom surfaces of a pair of battery modules 200 vertically adjacent to each other inside the first accommodation space 115 or the second accommodation space 116 may be greater than a height of any one battery module 200. That is, the height of the battery module 200 may be smaller than an interval between the pair of support rails 120 vertically adjacent to each other inside the first accommodation space 115 or the second accommodation space 116.

A vent B may be provided in an upper surface of the battery module 200 that is configured to discharge a flame or gas generated when a battery cell accommodated inside the battery module 200 ignites or thermally runs away from the battery module 200. The vent B may be a plurality of vents B. The plurality of vents B may be arranged in at least two rows in the longitudinal and width directions of the battery module 200.

A communication device for communication with external devices and a control device for controlling power transmission may be installed on a front surface of the battery module 200 facing the door 134.

The first channel 300 may face the vents B of the battery module 200, and may provide a primary movement path for the flame or gas discharged from the vent B. Since the battery modules 200 are vertically stacked inside the first accommodation space 115 or the second accommodation space 116, embodiments of the first channel 300 may include an empty space between the battery modules 200 arranged vertically and adjacently. A longitudinal direction of the first channel 300 may extend in the first direction, that is, the longitudinal direction of the cabinet 100.

The first channel 300 may be a plurality of first channels 300. The plurality of first channels 300 may be individually arranged between the battery modules 200 arranged vertically and adjacently. The first channels 300 may be arranged in two rows in the second direction. The first channels 300 arranged in different rows may be provided in the first accommodation space 115 and the second accommodation space 116.

The first channel 300 may include a first end portion 310 and a second end portion 320.

The first end portion 310 and the second end portion 320 may be disposed to be spaced apart from each other in the first direction. The first end portion 310 may face the inner surface of the door 134 and may be spaced a predetermined interval from the inner surface of the door 134. The second end portion 320 may face the inner surface of the end cover 132 and may be spaced at a predetermined interval from the inner surface of the end cover 132.

The second channel 400 may be inside the cabinet 100 and may be connected to the second end portion 320 of the first channel 300. The second channel 400 may be configured to function as a component that provides a secondary movement path for the flame or gas that has passed through the first channel 300. Embodiments of the second channel 400 may include an empty space between a rear surface of the battery module 200 and the inner surface of the end cover 132. The second channel 400 may cross the first channel 300. That is, the second channel 400 may extend vertically in the height direction of the cabinet 100. One surface of the second channel 400 may be connected to the second end portions 320 of the plurality of first channels 300.

A volume of the second channel 400 may be greater than a volume of the first channel 300. In one or more embodiments, the volume of the first channel 300 may be approximately 6.5 L, and the volume of the second channel 400 may be approximately 38.6 L. Accordingly, the second channel 400 maintains a relatively lower pressure than the first channel 300 such that the flame or gas discharged from the vents B may be naturally transmitted from the first channel 300 to the second channel 400 without any external force.

The energy storage system according to the present embodiment may further include a first partition P1 and a second partition P2.

The first partition P1 may be between the side cover 131 and the battery module 200. The first partition P1 may have a substantially flat plate shape. Both surfaces of the first partition P1 may face the inner surface of the side cover 131 and a side surface of the battery module 200 in parallel (or substantially in parallel). The first partition P1 may include a material with higher heat resistance and insulation properties than the side cover 131. In one or more embodiments, the side cover 131 may include a metal material such as steel, aluminum, or the like, and the first partition P1 may include a material such as mica or the like. Accordingly, the first partition P1 may lower the temperature of the side cover 131 in the event of a fire and prevent (or at least mitigate) damage to the side cover 131 due to the flame, thereby preventing (or at least mitigating) the spread of fire to adjacent equipment installed outside the cabinet 100.

The first partition P1 may be a plurality of first partitions P1. Some of the plurality of first partitions P1 may be between the battery modules 200 inside the first accommodation space 115 and any one side cover 131. The remaining ones of the plurality of first partitions P1 may be between the battery modules 200 inside the second accommodation space 116 and the other side cover 131.

The plurality of first partitions P1 facing the battery modules 200 inside the first accommodation space 115 may be individually between a pair of adjacent first outer frames 112. The plurality of first partitions P1 facing the battery modules 200 inside the second accommodation space 116 may be individually between a pair of adjacent second outer frames 113. An inner surface of the first partition P1 may be in contact with a side surface of the support rail 120. Accordingly, the first partition P1 may prevent (or at least mitigate) a flame or smoke introduced into the first channel 300 from being discharged to the outside through a side surface of the first channel 300.

The second partition P2 may be between the battery modules 200 arranged in different rows. That is, the second partition P2 may be between the first accommodation space 115 and the second accommodation space 116. The second partition P2 may have a substantially flat plate shape. Both surfaces of the second partition P2 may face the side surface of the battery module 200 inside the first accommodation space 115 and the side surface of the battery module 200 inside the second accommodation space 116 in parallel (or substantially in parallel). The second partition P2 may include the same material as the first partition P1. Accordingly, the second partition P2 may prevent (or at least mitigate) a fire occurring in any one of the first accommodation space 115 and the second accommodation space 116 from spreading to the other of the first accommodation space 115 and the second accommodation space 116.

The second partition P2 may be a plurality of second partitions P2. The plurality of second partitions P2 may be individually arranged between a pair of adjacent inner frames 114. An inner surface of the second partition P2 may be in contact with the side surface of the support rail 120. Accordingly, the second partition P2, together with the first partition P1, may prevent (or at least mitigate) the flame or smoke introduced into the first channel 300 from being discharged to the outside through the side surface of the first channel 300.

The guide member 500 is in the first channel 300 and is configured to guide the movement of the flame or gas discharged from the vents B in the first direction. That is, the guide member 500 may be configured to function as a component that guides the flame or gas discharged from the vents B to move toward the second end portion 320 connected to the second channel 400. Accordingly, the guide member 500 may prevent (or at least mitigate) secondary damage, such as ignition of the communication device and control device installed on the front surface of the battery module 200, damage to the door 134 due to pressure of a gas or the like, etc., in the event of a fire.

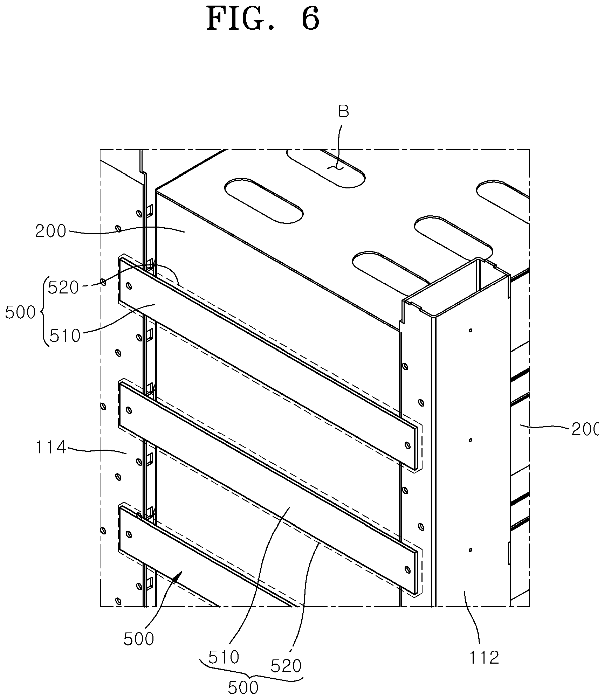

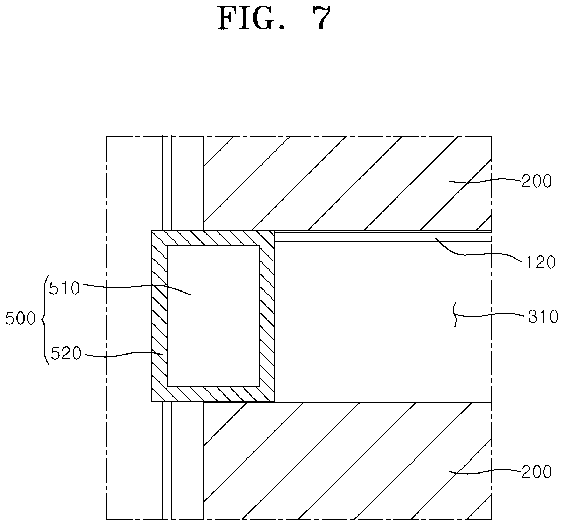

FIG. 6 is a perspective view schematically illustrating the configuration of the guide member 500 according to the embodiment of the present disclosure, and FIG. 7 is a cross-sectional view schematically illustrating the configuration of the guide member 500 according to the embodiment of the present disclosure.

Referring to FIGS. 1 to 7, the guide member 500 may include a guide vane 510 and a sealing member 520.

The guide vane 510 may be configured to function as a component that blocks (or at least mitigates against) the flame or gas introduced into the first channel 300 from being discharged to the first end portion 310. The guide vane 510 may have a substantially plate shape and may be located between the first end portion 310 and the door 134. Both surfaces of the guide vane 510 may face the first end portion 310 and the door 134. A vertical width of the guide vane 510 may be smaller than a vertical width of the first channel 300. In this case, the guide vane 510 may be inserted inside the first end portion 310. In contrast, a vertical width of the guide vane 510 may be greater than a vertical width of the first channel 300. In this case, the guide vane 510 may be disposed outside of the first end portion 310 and may face the first end portion 310.

The guide vane 510 may be a plurality of guide vanes 510. The plurality of guide vanes 510 may individually face the first end portions 310 of the respective first channels 300 stacked in the vertical direction. The plurality of guide vanes 510 may be arranged in two rows in the second direction. Both end portions of the guide vane 510 facing the first channel 300 in the first accommodation space 115 may be fixed to the first outer frame 112 and the inner frame 114. Both end portions of the guide vane 510 facing the first channel 300 in the second accommodation space 116 may be fixed to the second outer frame 113 and the inner frame 114.

The guide vane 510 may include a metal material with high rigidity, such as steel or the like, to prevent (or at least mitigate) damage due to pressure of the gas or the like introduced into the first channel 300.

The sealing member 520 may be coupled to the guide vane 510 and may seal a gap between the first end portion 310 and the guide vane 510. The sealing member 520 may be elastically deformable. That is, the sealing member 520 may be configured to function as a component that completely (or substantially completely) seals the first end portion 310 by filling a gap between the guide vane 510 (which is rigid) and the battery module 200 (which is elastically deformable). The sealing member 520 may include a flexible material such as rubber, silicon, or the like, and may entirely (or substantially entirely) surround an outer surface of the guide vane 510.

The discharge member 600 may be connected to the second channel 400 and may be configured to discharge the gas introduced into the second channel 400 to the outside of the cabinet 100. Further, the discharge member 600 may be configured to block (or at least mitigate against) the flame introduced into the second channel 400 from being discharged to the outside of the cabinet 100. Accordingly, the discharge member 600 may be configured to prevent (or at least mitigate) the internal pressure of the cabinet 100 from excessively increasing in the event of a fire, and at the same time, prevent (or at least mitigate) the spread of the fire due to the outflow of the flame.

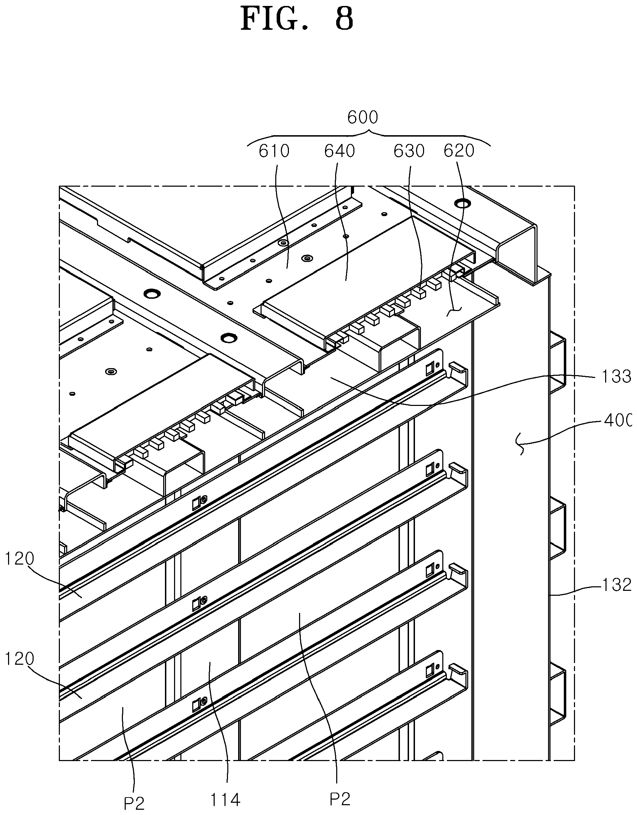

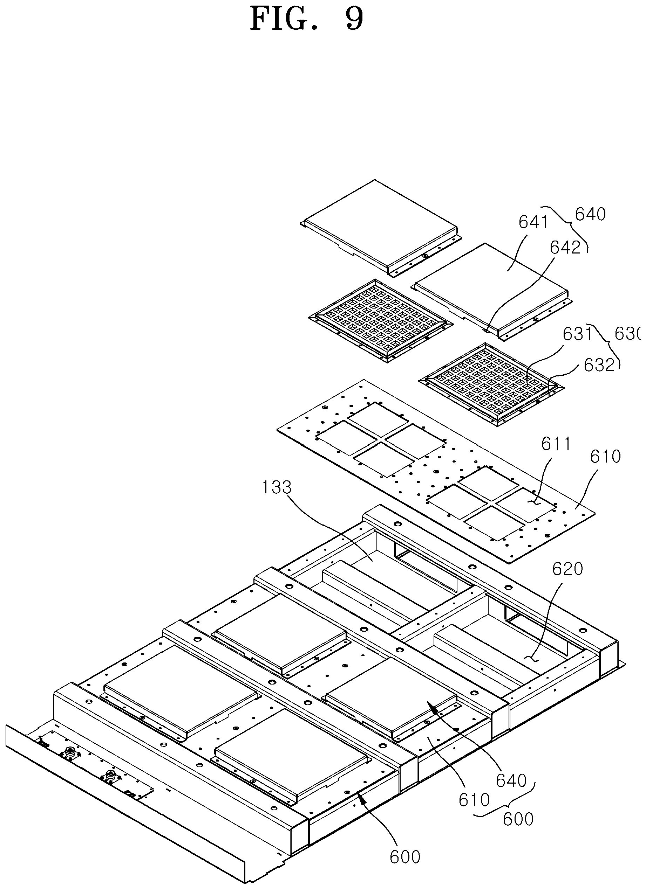

FIG. 8 is a cross-sectional perspective view schematically illustrating the configuration of the discharge member 600 according to the embodiment of the present disclosure, and FIG. 9 is an exploded perspective view schematically illustrating the configuration of the discharge member 600 according to the embodiment of the present disclosure.

Referring to FIGS. 8 and 9, the discharge member 600 may include a discharge plate 610, a third channel 620, a blocking member 630, and a canopy 640.

The discharge plate 610 may be in an outer side of the cabinet 100. The discharge plate 610 may have a substantially flat shape, and a lower surface of the discharge plate 610 may face an upper surface of the top cover 133. The lower surface of the discharge plate 610 may be spaced a predetermined interval from the upper surface of the top cover 133. Accordingly, a space in which the third channel 620, which will be described below, can be formed may be between the discharge plate 610 and the top cover 133. The discharge plate 610 may be a plurality of discharge plates 610. The plurality of discharge plates 610 may be parallel (or substantially parallel) to each other on the top cover 133.

At least one discharge hole 611 may be in the discharge plate 610 to provide a path through which the flame or gas introduced into the third channel 620, which will be described below, is discharged. The discharge hole 611 may be a hole vertically passing through the discharge plate 610. The discharge hole 611 may be a plurality of discharge holes 611. The plurality of discharge holes 611 may be spaced apart from each other in the discharge plate 610.

Embodiments of the third channel 620 may include an empty space formed inside the discharge plate 610 (e.g., between the discharge plate 610 and the top cover 133). One side of the third channel 620 may pass through the top cover 133 and may be connected to an upper end portion of the second channel 400. The other side of the third channel 620 may be connected to the discharge hole 611. The other side of the third channel 620 may be connected to all of the plurality of discharge holes 611. The third channel 620 may cross the second channel 400. That is, the third channel 620 may be perpendicular (or substantially perpendicular) to the height direction of the cabinet 100. Accordingly, the third channel 620 may be configured to reduce the movement speed of the flame transmitted from the second channel 400, and thus the flame blocking performance of the blocking member 630, which will be described below, may be further improved.

The blocking member 630 may face the discharge hole 611 and may be configured to block (or at least mitigate) the flame introduced into the third channel 620 from passing through the discharge hole 611. At the same time, the blocking member 630 may be configured to allow the gas introduced into the third channel 620 to pass through the discharge hole 611.

The blocking member 630 may include a blocking filter 631 and a filter bracket 632.

The blocking filter 631 may be a plate in which a plurality of mesh holes are arranged in a lattice shape, which are configured to allow the passing of the gas discharged from the discharge hole 611 but blocking (or at least mitigating) the passing of the flame. The blocking filter 631 may include a material with high heat resistance property, for example, at least one of stainless steel, copper, nickel, titanium, silver, tungsten, and aluminum, or an alloy thereof. The blocking filter 631 may face the discharge hole 611 on the discharge plate 610. In one or more embodiments, the blocking filter 631 may face the discharge hole 611 inside the third channel 620. The blocking filter 631 may be a plurality of blocking filters 631. The plurality of blocking filters 631 may be stacked in the passing direction of the discharge hole 611 with respect to the discharge plate 610, that is, in the vertical direction.

The filter bracket 632 may support the blocking filter 631 with respect to the discharge plate 610. The filter bracket 632 may face the discharge plate 610 with the blocking filter 631 located therebetween. An inner region of the filter bracket 632 may surround an edge of the blocking filter 631 and may be fixed to the edge of the blocking filter 631 in any suitable manner, such as by welding, bolting, etc. An outer region of the filter bracket 632 may be in contact with the discharge plate 610 and may be fixed to the discharge plate 610 in any suitable manner, such as by welding, bolting, etc.

The canopy 640 may face the blocking member 630 and may be configured to guide the discharge of the gas that has passed through the blocking member 630.

The canopy 640 may include a canopy body 641 and a guide hole 642.

The canopy body 641 may have the shape of a box with an empty interior and an open side. The canopy body 641 may be arranged so that the open side thereof faces the blocking member 630. An area of the canopy body 641 may be greater than an area of the blocking member 630, and an edge region of the canopy body 641 may be fixed to the discharge plate 610 in any suitable manner, such as by welding, bolting, etc. Accordingly, the canopy body 641 may be configured to prevent (or at least mitigate) foreign substances contained in the gas that has passed through the blocking filter 631 from scattering to the outside of the cabinet 100.

The guide hole 642 may pass through the canopy body 641 and may be configured to guide the discharge direction of the gas introduced into the canopy body 641. Accordingly, the guide hole 642 may be configured to guide the gas discharged to the outside of the cabinet 100 to move in a certain direction, and thus damage to adjacent parts or the like that are sensitive to contact with the gas may be prevented (or at least mitigated). The guide hole 642 may be a hole passing through a side surface of the canopy body 641. The guide hole 642 may be a plurality of guide holes 642. The plurality of guide holes 642 may be spaced apart from each other along an outer peripheral surface of the canopy body 641.

Hereinafter, operation of the energy storage system according to the embodiment of the present disclosure will be described.

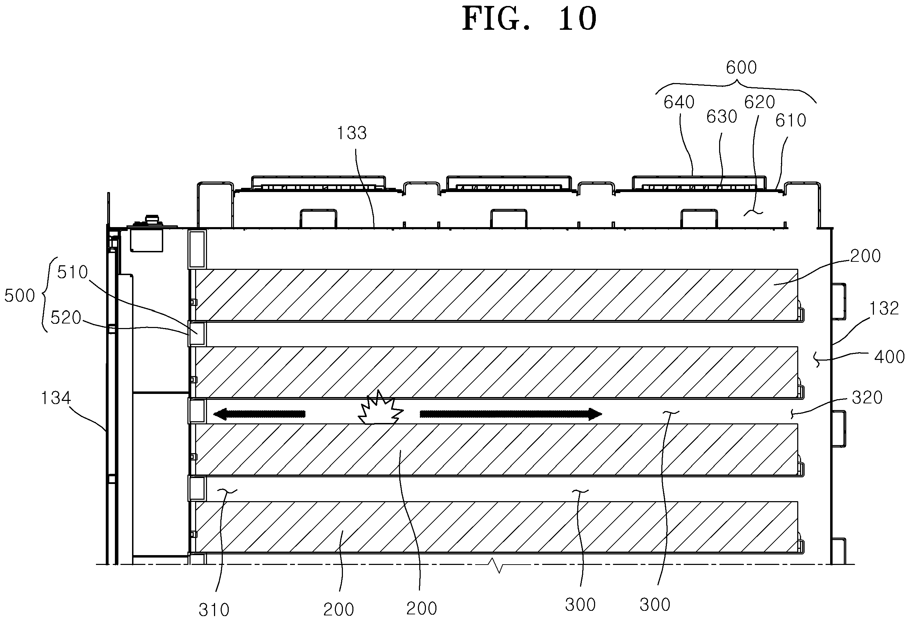

FIGS. 10 to 13 are views schematically illustrating the operation of the energy storage system according to the embodiment of the present disclosure.

Referring to FIG. 10, when a fire occurs in any one battery module 200, a flame or gas discharged from the vent B of the corresponding battery module 200 may be introduced into the first channel 300 facing the vent B of the corresponding battery module 200.

The flame or gas introduced into the first channel 300 may be moved toward the first end portion 310 and the second end portion 320 in an extension direction of the first channel 300.

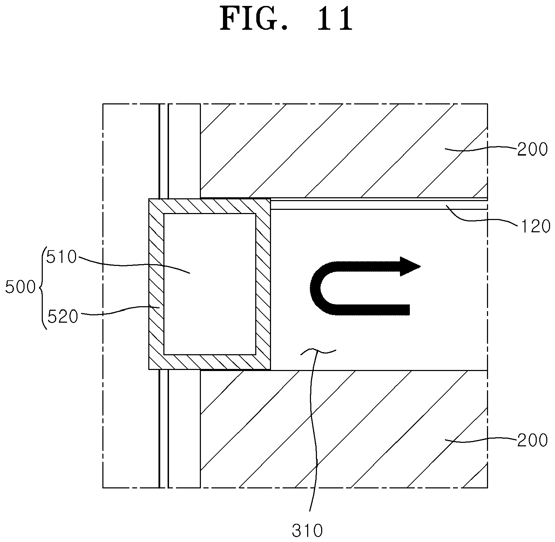

Referring to FIG. 11, the flame or gas that moved toward the first end portion 310 may be blocked from being discharged to the outside of the first end portion 310 by the guide member 500, and the movement direction may be changed (redirected) to a direction toward the second end portion 320, that is, the first direction, due to contact (interference) with the guide member 500.

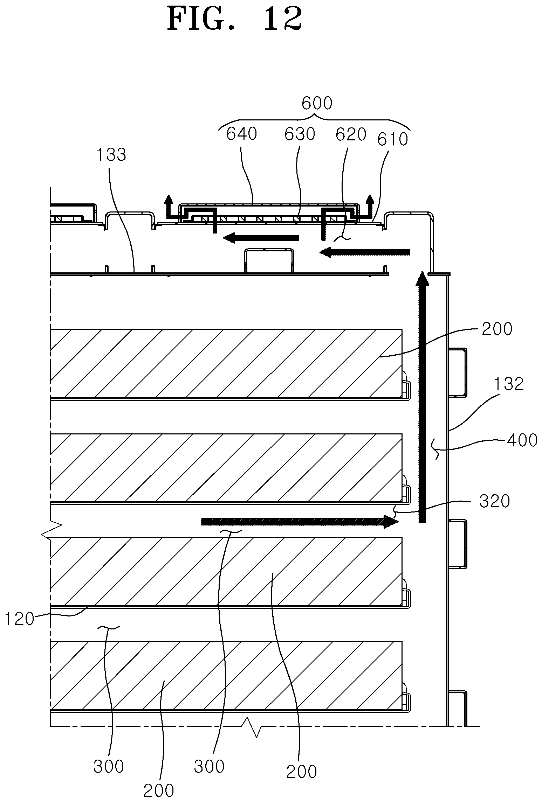

Referring to FIG. 12, the flame or gas that moved toward the second end portion 320 may be introduced into the second channel 400. In one or more embodiments, the second channel 400 crosses the first channel 300, and thus the movement speed of the flame or gas introduced into the second channel 400 may be reduced.

The flame or gas introduced into the second channel 400 may be moved toward the upper end portion of the second channel 400 in an extension direction of the second channel 400, and introduced into the third channel 620. In one or more embodiments, the third channel 620 crosses the second channel 400, and thus the movement speed of the flame or gas introduced into the second channel 400 may be secondarily reduced.

In one or more embodiments, the volume of the second channel 400 is greater than the volume of the first channel 300, and thus the flame or gas introduced into the first channel 300 may be continuously moved toward the second channel 400 without any additional external force.

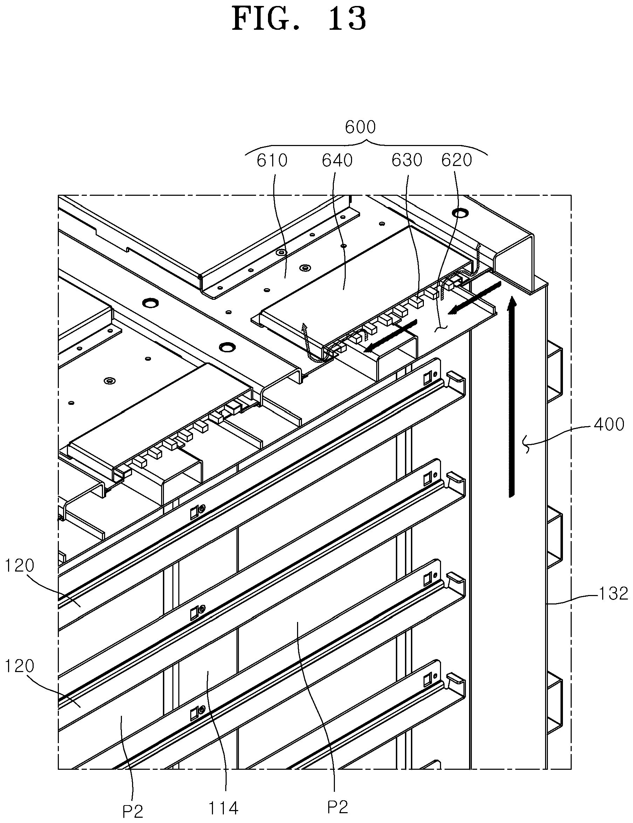

Referring to FIG. 13, the flame or gas introduced into the third channel 620 may be transmitted to the discharge holes 611 in an extension direction of the third channel 620.

The flame introduced into the discharge holes 611 may come into contact with the blocking filter 631, and the blocking filter 631 may block (or at least mitigate) the passing of the flame by absorbing the heat of the flame through heat exchange with the flame.

The gas introduced into the discharge holes 611 may pass through the mesh holes of the blocking filter 631 and may be transmitted into the canopy body 641.

The gas introduced into the canopy body 641 may be finally discharged from the inside of the cabinet 100 through the guide hole 642.

Hereinafter, an energy storage system according to another embodiment of the present disclosure will be described.

The energy storage system according to the present embodiment may be configured to differ only in a detailed configuration of the guide member 500 from the energy storage system according to an embodiment of the present disclosure described with reference to FIGS. 1 to 13.

Accordingly, in describing the energy storage system according to the present embodiment, only the detailed configuration of the guide member 500 that was not described in the description of the energy storage system according to an embodiment of the present disclosure will be described.

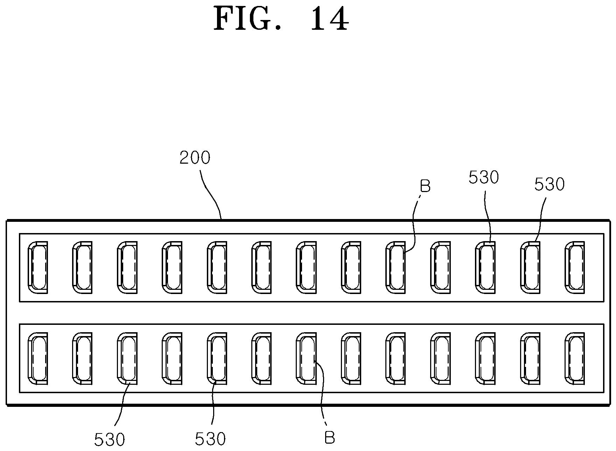

FIG. 14 is a plan view schematically illustrating the configuration of the energy storage system according to another embodiment of the present disclosure,

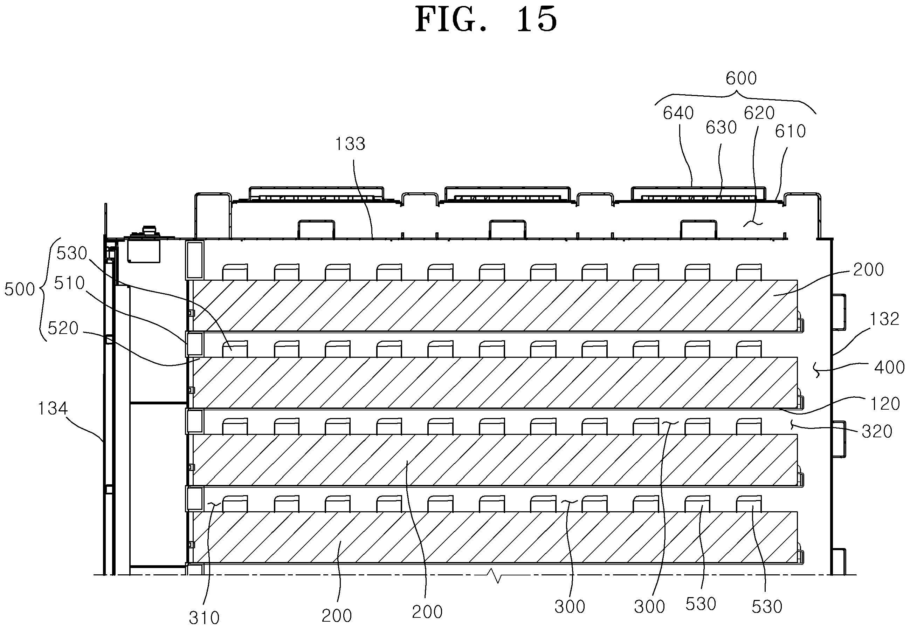

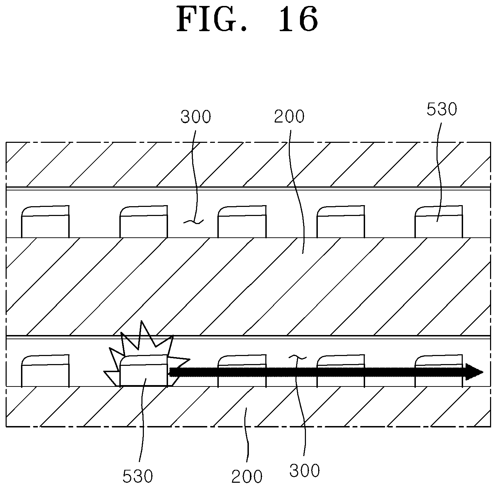

FIG. 15 is a cross-sectional view schematically illustrating a configuration of an energy storage system according to another embodiment of the present disclosure, and FIG. 16 is a view schematically illustrating a state in which a flame or gas is discharged from a vent.

Referring to FIGS. 14 to 16, the guide member 500 according to the present embodiment may further include a guide louver 530.

The guide louver 530 may be inside the first channel 300. An inside of the guide louver 530 may be empty, and a lower surface of the guide louver 530 may face the vent B of the battery module 200. The lower surface of the guide louver 530 may be open. Accordingly, the flame or gas discharged from the vent B may be introduced into the guide louver 530. A circumferential or peripheral surface of the guide louver 530 facing the second end portion 320 may be open. Accordingly, the guide louver 530 may be configured to change (redirect) the movement direction of the flame or gas discharged from the vent B to the second end portion 320 to guide the flame or gas introduced into the first channel 300 to be transmitted to the second channel 400 more rapidly.

The guide louver 530 may be a plurality of guide louvers 530. The plurality of guide louvers 530 may individually face one of the vents B. The plurality of guide louvers 530 may be integrally connected through a plate or the like, or may be separate from each other.

Hereinafter, an energy storage system according to still another embodiment of the present disclosure will be described.

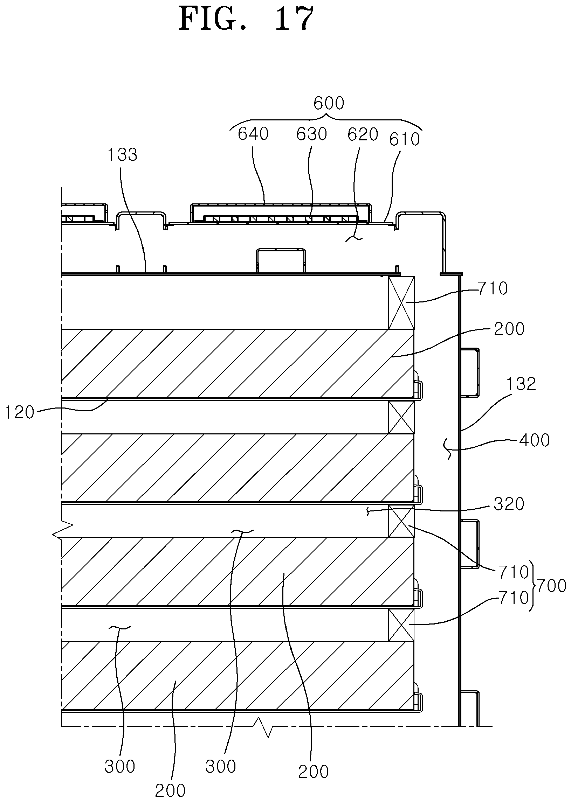

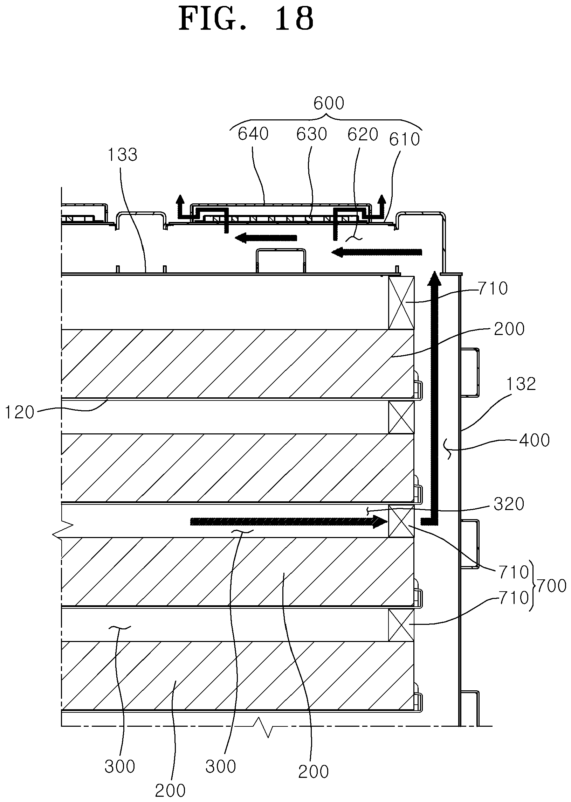

FIG. 17 is a cross-sectional view schematically illustrating a configuration of an energy storage system according to still another embodiment of the present disclosure, and FIG. 18 is a view schematically illustrating an operation of the energy storage system according to still another embodiment of the present disclosure.

Referring to FIGS. 17 and 18, the energy storage system according to the present embodiment may further include a backflow prevention member 700.

The energy storage system according to the present embodiment may be configured to differ from the energy storage system described with reference to FIGS. 1 to 13 or the energy storage system described with reference to FIGS. 14 to 16 in that a backflow prevention member 700 is further included.

Accordingly, in describing the energy storage system according to the present embodiment, only the backflow prevention member 700 that was not described with reference to FIGS. 1 to 16 will be described.

The backflow prevention member 700 may be between the first channel 300 and the second channel 400 and may be configured to block the flame or gas introduced into the second channel 400 from being moved backward into the first channel 300. Accordingly, the backflow prevention member 700 may be configured to prevent (or at least mitigate) damage to the battery module 200 that may occur when the flame or gas is moved backward into the first channel 300 due to a sudden pressure drop in the second channel 400. Further, since the pressure of the first channel 300, in which no fire occurs, is lower than the pressure of the second channel 400, the backflow prevention member 700 may be configured to prevent (or at least mitigate) the flame or gas transmitted to the second channel 400 from being introduced into the first channel 300 in which no fire occurs.

The backflow prevention member 700 may include a check valve 710.

The check valve 710 may be inside the second end portion 320. Embodiments of the check valve 710 may include various types of pressure control valves that are configured to open in response to the pressure of the first channel 300 exceeding the pressure of the second channel 400, and that are configured to close in response to the pressure of the first channel 300 being lower than the pressure of the second channel 400. The check valve 710 may be a plurality of check valves 710. Each of the plurality of check valves 710 may be individually provided in the second end portion 320 of a respective one of the first channels 300.

According to the present disclosure, it is possible to reduce damage caused by a fire by allowing a flame or gas generated due to ignition or thermal runaway of a battery module to be moved through a set path.

According to the present disclosure, it is possible to prevent (or at least mitigate) the spread of fire due to the outflow of a flame by allowing gas to be discharged to the outside of a cabinet and at the same time blocking a flame from being discharged to the outside of the cabinet.

According to the present disclosure, it is possible to prevent (or at least mitigate) a fire occurring in any one battery module from spreading to adjacent battery modules or adjacent equipment installed outside the cabinet by a first partition and a second partition.

According to the present disclosure, by changing (redirecting) a movement path for a flame multiple times, a transmission speed of the flame can be lowered and the flame blocking performance of a blocking member can thereby be further improved.

However, the effects obtainable through the present disclosure are not limited to the above effects, and other technical effects that are not mentioned will be clearly understood by those skilled in the art from the preceding description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. An energy storage system comprising:
a cabinet;
a plurality of battery modules inside the cabinet, each of the plurality of battery modules comprising a vent;
a first channel facing the vent and comprising a first end portion and a second end portion spaced apart from each other in a first direction;
a second channel inside the cabinet and connected to the second end portion;
a guide member in the first channel and configured to guide movement of a flame or gas discharged from the vent in the first direction; and
a discharge member connected to the second channel and configured to discharge a gas introduced into the second channel to an outside of the cabinet.

2. The energy storage system as claimed in claim 1, wherein:
the plurality of battery modules are stacked vertically inside the cabinet; and
the first channel is between a pair of vertically adjacent battery modules of the plurality of battery modules.

3. The energy storage system as claimed in claim 2, wherein a distance between bottom surfaces of the pair of vertically adjacent battery modules is greater than a height of any one of the plurality of battery modules.

4. The energy storage system as claimed in any preceding claim, wherein a volume of the second channel is greater than a volume of the first channel.

5. The energy storage system as claimed in any preceding claim, wherein the cabinet comprises:
a frame body;
a support rail inside the frame body, the support rail supporting the plurality of battery modules; and
a cover surrounding an outer surface of the frame body.

6. The energy storage system as claimed in claim 5, wherein:
the cover comprises a pair of side covers facing side surfaces of the plurality of battery modules and spaced apart from each other in a second direction crossing the first direction; and
the energy storage system further comprises a first partition between the pair of side covers and the plurality of battery modules.

7. The energy storage system as claimed in claim 6, wherein:
the plurality of battery modules are arranged in at least two rows in the second direction; and
the energy storage system further comprises a second partition between battery modules of the plurality of battery modules arranged in different rows.

8. The energy storage system as claimed in claim 6 or 7, wherein the cover further comprises:
a door facing the first end portion, the door being configured to open or close an internal space of the frame body; and
an end cover spaced apart from the door and facing the second end portion.

9. The energy storage system as claimed in any preceding claim, wherein the guide member comprises a guide vane facing the first end portion, the guide member being configured to block a flame or gas introduced into the first channel from being discharged into the first end portion.

10. The energy storage system as claimed in claim 9, wherein the guide member further comprises a sealing member coupled to the guide vane, the sealing member sealing a gap between the first end portion and the guide vane.

11. The energy storage system as claimed in claim 9 or 10, wherein the guide member further comprises a guide louver facing the vent, the guide louver being configured to change a movement direction of the flame or gas discharged from the vent toward the second end portion.

12. The energy storage system as claimed in any preceding claim, wherein the discharge member comprises:
a discharge hole in an outer side of the cabinet;
a third channel inside the discharge hole and connected to the second channel and the discharge hole;
a blocking member facing the discharge hole, the blocking member being configured to block a flame introduced into the third channel from passing through the discharge hole; and
a canopy facing the blocking member and configured to guide discharge of the gas passing through the blocking member.

13. The energy storage system as claimed in claim 12, wherein the blocking member comprises a blocking filter comprising a plurality of mesh holes.

14. The energy storage system as claimed in any preceding claim, further comprising a backflow prevention member between the first channel and the second channel, the backflow prevention member being configured to block the flame or gas introduced into the second channel from flowing backward into the first channel.

15. The energy storage system as claimed in claim 14, wherein the backflow prevention member comprises a check valve, the check valve being configured to open in response to a pressure of the first channel exceeding a pressure of the second channel.
